# EUROPEAN PATENT APPLICATION

(11) **EP 3 168 147 A1**
(43) Date of publication of application: **17.05.2017**
(21) Application number: 15819516.4
(22) Date of filing: 14.08.2015
(51) Int. Cl.: B64C 29/00, B64C 27/22, B64C 27/18

(54) **VERTICAL TAKE-OFF AND LANDING AIRCRAFT**

(30) Priority: 08.07.2014 RU 2014127730
(71) Applicant: Noroian, Gevorg Serezhaevich, Primorskij kray 692300 (RU)
(72) Inventor: Noroian, Gevorg Serezhaevich, Primorskij kray 692300 (RU)
(74) Representative: Jeck, Anton
(86) International application number: PCT/RU2015/000520
(87) International publication number: WO 2016/007049

(57) **Abstract**

The invention relates to aviation technology, specifically to vertical take-off and landing aircraft. The vertical take-off and landing aircraft comprises two turbines, the lower of which is of plate-like shape, and the upper is of flat or plate-like shape. Each turbine comprises a reactive power plant. The body of each turbine is mounted on a metallic disc connected to a vertical shaft of the aircraft, and is equipped with vanes. The vanes are mounted such that the position thereof can be changed. The aircraft can comprise intermediate turbines which are mounted between the upper and lower turbine and are flat or plate-like. The reactive power plant of each turbine comprises an air engine and receivers which are connected to a compressor. The body of each turbine is metallic and comprises two rings, one of which is connected to the disc, and also radial struts which are mounted along the perimeter of the turbine body and are connected to the rings and vanes. The vanes are mounted in a single row along the perimeter of the body or are arranged in a single tier. The result is an increase in the reliability and economy of the aircraft, and the possibility of the latter moving vertically, horizontally or at any inclination.

## Description

The invention is related to aviation technology, namely to aircraft with vertical takeoff and landing, and may be used in civil and military aviation, as well as in aerospace.

The most technically similar to the invention is the aircraft with vertical takeoff and landing (RU 2266846 C2, B64C29/02, B64C21/04, published on December 27, 2005). This aircraft includes jet propulsion, located in the center of the flat, round-plane wing, which includes turbochargers. The lift force in the known aircraft is created by the difference in static pressure of atmospheric air, acting on the aircraft from below, and static pressure of the circular radial air jet, acting on the aircraft from above.

The deficiencies of said aircraft is its inability to ensure sufficient lift force and load ratio, as well as high fuel consumption, which is spent to remove static pressure from above, which reduces aircraft's fuel economy and reliability.

The technical result of the proposed invention is the creation of an economic and reliable aircraft, which can move vertically, horizontally or at any incline, using air streams.

The said technical result is achieved because the aircraft with vertical takeoff and landing includes at least two turbines, the lower of which is plate-shaped, while the upper one is flat or plate-shaped, as well as each turbine contains jet propulsion, and the housing of each turbine is placed on a metal disc, connected to the vertical shaft of the aircraft, and equipped with blades, able to change its position.

Furthermore, the aircraft may have, at least, one intermediate turbine, installed between upper and lower turbines and designed as flat or plate-shaped.

The aircraft may be designed with a cabin.

Jet propulsion of each turbine includes, at least, one air engine and receivers, connected with compressor(s).

To ensure side movement, the aircraft is equipped with, at least, one horizontal movement turbine and air intakes, which interact with each other through receivers of the internal turbine with regulating crossover valves.

The housing of each turbine is made of metal and includes, at least, two rings, one of which is connected with a disc, as well as radial struts, installed along the turbine housing perimeter and connected with rings and blades.

To change the position of blades, the aircraft is equipped with automated controlment of the incline of blades and/or automated controlment of emergence of blades.

Blades may be placed:
- at least, in one row along the housing perimeter;
- at least, in one tier;
- partially overlapping each other.

The aircraft additionally contains side blades, positioned on turbine housings and designed to change the angle of their turn up to 90°.

The aircraft is equipped with electric generators.

To ensure horizontal position during the flight, the aircraft is equipped may be equipped with a balancing wing, installed on the upper turbine housing and designed with ability to control its turn.

The aircraft may be equipped with supports for landing and standing.

Aircraft turbines, which use head-on wind force to land and to move in any direction, allow to overcome upper atmospheric resistance due to air passing from above downward through turbines, assisting the aircraft to climb and accelerate (both when climbing, as well as when moving), as well as to save energy while moving.

The aircraft contains, at least, two turbines (upper and lower). Depending on payload capacity, the aircraft may contain, at least, one intermediate turbine. The lower turbine is plate-shaped, while the upper and intermediate turbines may be plate-shaped or flat form. The intermediate turbine or several intermediate turbines are installed between upper and lower turbines. Each turbine is installed horizontally onto a corresponding disc, connected with the aircraft's vertical shaft.

Each turbine housing (upper, lower and intermediate) are made of metal, equipped with blades and include, at least, two rings (small and large), one of which is mechanically (large) fastened to the corresponding disc, and radial support struts are installed at an angle and connected to rings. Turbine housings may contain one or more intermediate rings, installed between the small and large rings. The number of intermediate rings depends on the size of the aircraft (the bigger the aircraft, the more intermediate rings may be installed) and the size of blades.

All rings (including intermediate ones) of turbine housings are mechanically fastened between each other by radial struts.

Radial support struts may be installed along the horizontal surface (flat turbine) or at an angle relative to the vertical surface (plate-shaped turbine). Struts may be designed straight or arc-shaped (for spherical aircrafts). The number of struts depends on the number and sizes of blades.

Radial struts and turbine housing rings may have a round shape (pipe-shaped), as well as other shapes.

Radial struts of turbine housings may be used as additional receivers during the aircraft's emergency landing.

If necessary, spherical turbine housings may be used.

Blades are installed along the whole perimeter of each turbine housing and fastened to support axles (radial struts) to ensure side movement on the axis (to the right and to the left). Blades may be fastened to any place on the beam, either at the central part of the blade or at the edge.

Blades may be installed, at least, in one row along the entire perimeter of the turbine housing. A row of blades is placed between two turbine housing rings. One intermediate ring is added to the turbine housing for every subsequent row of blades. Intermediate ring diameters depend on the blade length in the added row and the aircraft's turbine housing size.

Blades may be installed by various methods: adjacent to each other, partially overlapping each other or with clearance relative to each other.

Blades are made of metal. The number of blades and their width may vary and depends on the aircraft's size. Preferably, blades should be of flat trapezoidal shape.

Blades may also be placed, at least, in one tier. The number of blade tiers depends on the aircraft's required power. Furthermore, the second and subsequent blade tiers are fastened below the upper blade tier (nearby). The size of blades of the second and subsequent tiers may be equal to the size of upper blades or may vary. A separate set of calculations of blade sizes is performed in every case. The blades of the second and subsequent tiers may be installed in parallel or at a small angle relative to the upper blade tier. The distance between tiers may vary.

Blades are equipped with an automated blade angle controlment and/or automated blade extension controlment, installed on the shaft, enabling blade operation control by side incline of the blade and and extension of the blade in the vertical plane (lifting and lowering), i.e. to change blade position. Furthermore, the blade is connected to the automated extension controller by the controlment lever. Furthermore, the blade is connected to the automated blade angle controlment by the controlment lever. The blade is connected to the automated blade extension controlment by the controlment lever and shaft, whose one end is fastened by hinge bearings with one of the rings (small) of the housing, while another end with a corresponding blade. Shafts are placed parallel to radial struts and evenly along the entire radius of each turbine housing.

Automated blade angle and extension controllers enable the autonomous and synchronous operation of every row (or tier) of aircraft blades.

Shafts, to which blades are connected, fastened by hinges to the turbine housing ring (small).

The aircraft may additionally contain side (vertical) blades, placed on turbine housings (on edges) and designed to change the turning angle up to 90°. The side blade movement is ensured by the automated side blade controlment and/or automated side blade extension controlment, placed on the shaft, enabling the side blade operation control. Side blades are connected with automated controllers in the same way as other turbine blades. When moving in the horizontal plane, one side of the side blade is lowered to collect air, and when landing, adds a side blade extension (lifted). The side blade turning angle is controlled depending on the needed landing or climbing speed of the aircraft. Side blades may be rectangular in shape and installed on hinged supports. Shafts, to which blades are connected, fastened by hinges to the turbine housing ring (large).

Intermediate turbines may be designed with a smaller diameter and installed in the upper or lower turbine so they would not be seen from outside. In such cases, intermediate turbines are designed without side blades.

The upper turbine may have the shape of an upside down plate. The lower turbine may be plate-shaped, i.e. to mirror the upside down plate. The lower turbine is designed the same way as the upper turbine. Radial struts on the upper and lower turbine may be installed at the same angle or at different angles relative to the plane of horizontal discs.

All turbines are separately connected to jet propulsion systems. The number and power of jet propulsion systems depends on the number of turbines on the aircraft. Jet propulsion system of each turbine includes, at least, one air engine and receivers, connected to blower(s). When taking off, jet propulsion system works synchronously (with the same rpm), even if accounting for jet propulsion systems with different power ratings. Each jet propulsion system is also equipped with a built-in starter generator. Jet propulsion system nozzles are directed downward to increase the aircraft's lift force. Jet propulsion system air engine is connected with the receiver and works in emergency situations, ensuring the aircraft's safe landing.

To ensure side movement (in the horizontal plane), the aircraft may be equipped with, at least, one horizontal movement turbine and air intakes, which connect by horizontal movement turbine receivers to controlling crossover valves. Horizontal movement turbines may be installed horizontally between upper and intermediate turbines or between lower and intermediate turbine, or between intermediate turbines. The number of horizontal movement turbines may vary. Furthermore, each horizontal place may have several (at least two) synchronously operating internal turbines, equal in power, e.g. one to the right of the aircraft cabin and the second one to the left of the aircraft cabin.

Horizontal movement turbines ensure forward movement and aircraft turning by increasing or decreasing air passing through the jet propulsion system nozzle.

Jet propulsion system nozzles may be connected to and equipped with crossover valves to control the passage of exhaust gases from nozzles. To improve the aircraft's maneuverability, a separate blower with a separate receiver and separate two or four outlets in different directions may be installed in such a way so that crossover valves would open when the aircraft would perform a turn.

The aircraft is designed so the center of gravity would be lower (by altitude) than the center of the aircraft. The main load is placed in the central part of the aircraft, a little bit lower (by altitude) from the center to ensure the aircraft's stability.

The aircraft is equipped with electric generators to be more fuel-efficient. When necessary, turbines switch to electric generators and generate electricity, which is transferred to corresponding aircraft systems, including to the automated angle and extension blade controllers. When necessary, generated electricity may be used as needed for any aircraft turbines.

The aircraft may be equipped with the pilot cabin. The cabin may be located in the center of the aircraft at the level of horizontal movement turbines or above the upper turbine.

The aircraft may be equipped with supports for landing and standing, e.g. parking feet, which are fastened to the lower turbine housing by various known methods.

There several more possible aircraft design options.

The aircraft may be designed without intermediate turbines. In that case, the aircraft will consist of two (upper and lower) turbines. Horizontal movement turbines may also be installed between the upper and lower turbine, while the aircraft's center of gravity shall be at the center of the lower turbine.

There is also another possible option, where the aircraft is designed with a flat upper turbine, while the lower turbine is plate-shaped. With such option, the aircraft may also be equipped with horizontal movement turbines, and the center of gravity of the aircraft shall be at the center of the lower turbine.

The altitude during the aircraft movement in the horizontal plane is ensured by the lower turbine due to its degree of taper.

To increase its stability, the aircraft may be equipped with a balancing wing, installed horizontally on the housing of the upper turbine in such a way so it would not hinder lifting of the blades. The balancing wing is fastened to the vertical shaft of the aircraft and on the upper turbine housing by hinged supports. The balancing wing is controlled by altitude, i.e. when one part of the wing is lifted (front one relative to the aircraft's movement), the other (rear one relative to the aircraft's movement) part is lowered, ensuring the required angle of air intake. When it is lifted up to the vertical level, the balancing wing operates as a brake. When moving down, air pushes from above on the front part of the balancing wing and the aircraft climbs at an angle.

Also, the aircraft's balance may be controlled, if the nozzle is directed downward and install an automated controller on it to control the nozzle angle relative to the horizontal plane.

The claimed invention is explained by the following drawings:

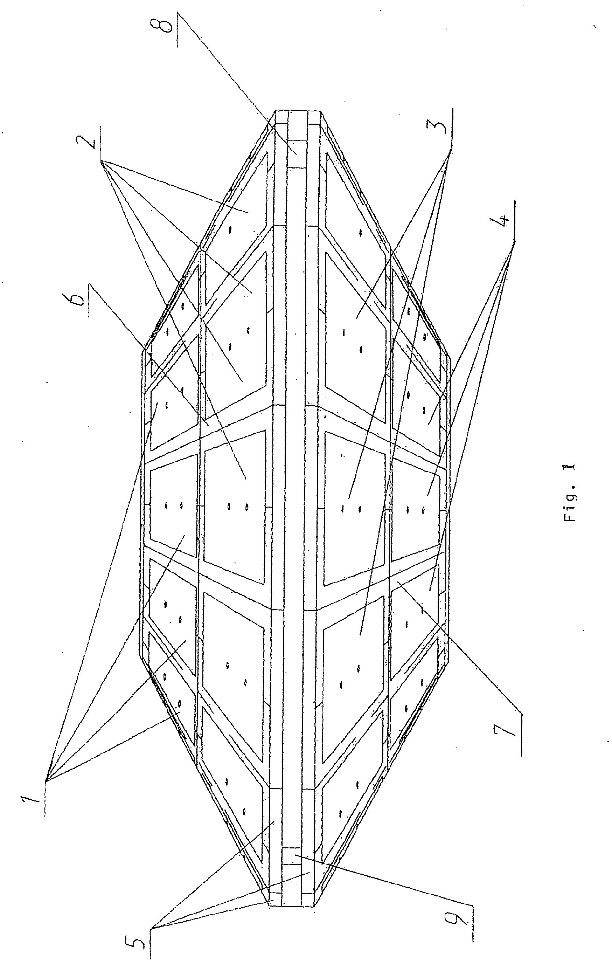

Fig. 1 shows the general view of the aircraft with the horizontal movement turbine;

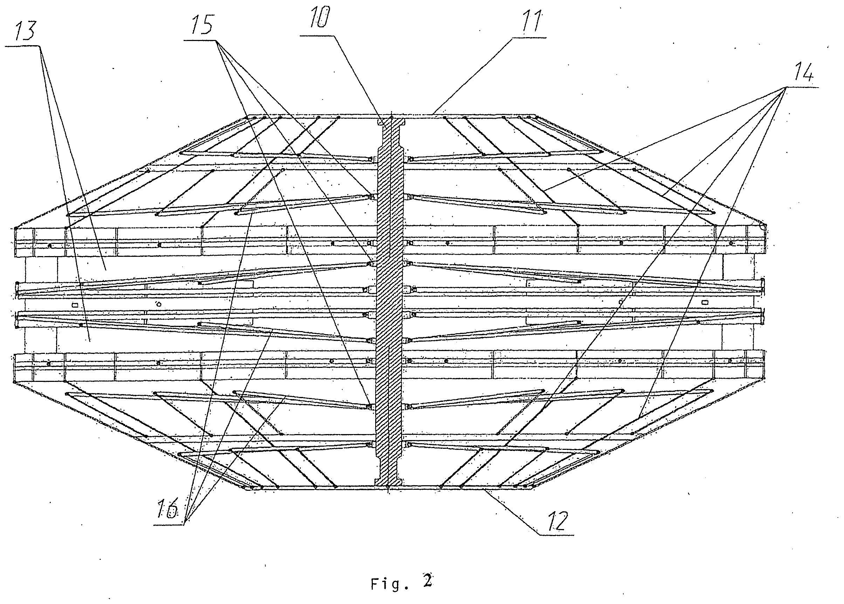

Fig. 2 shows the aircraft's cross-section with two intermediate turbines;

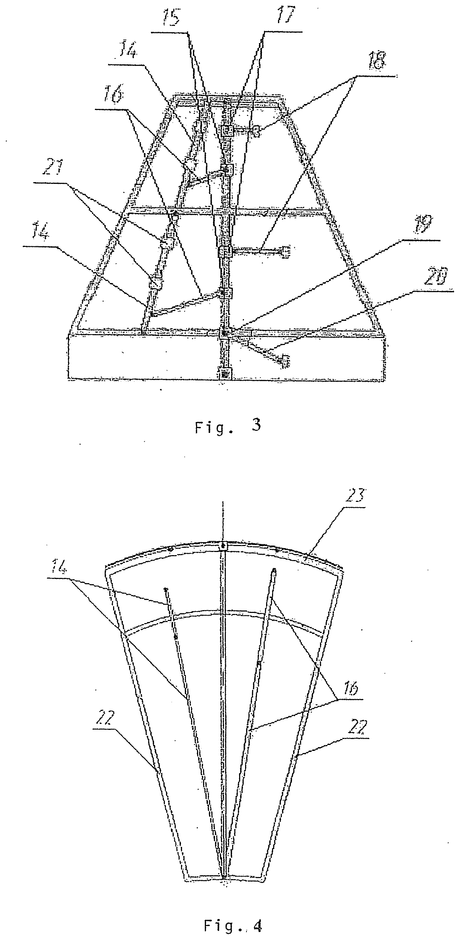

Fig. 3 shows blades from two neighboring rows (view from within);
Fig. 4 shows the turbine housing section with two neighboring blade rows (top view);

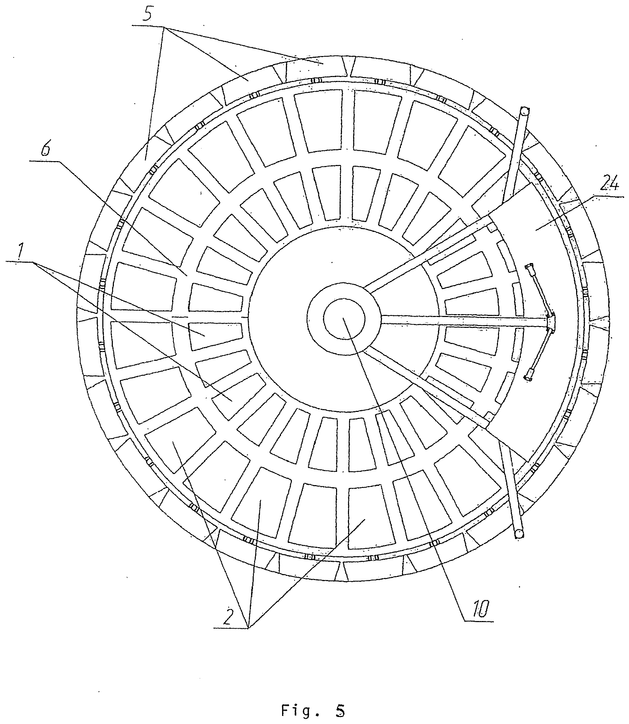

Fig. 5 shows the aircraft (top view);

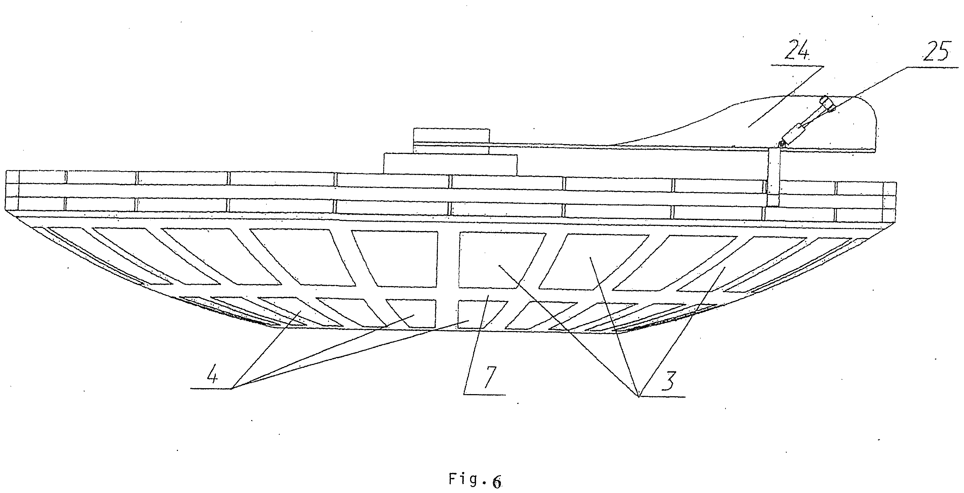

Fig. 6 shows the aircraft's design option with the flat upper turbine;

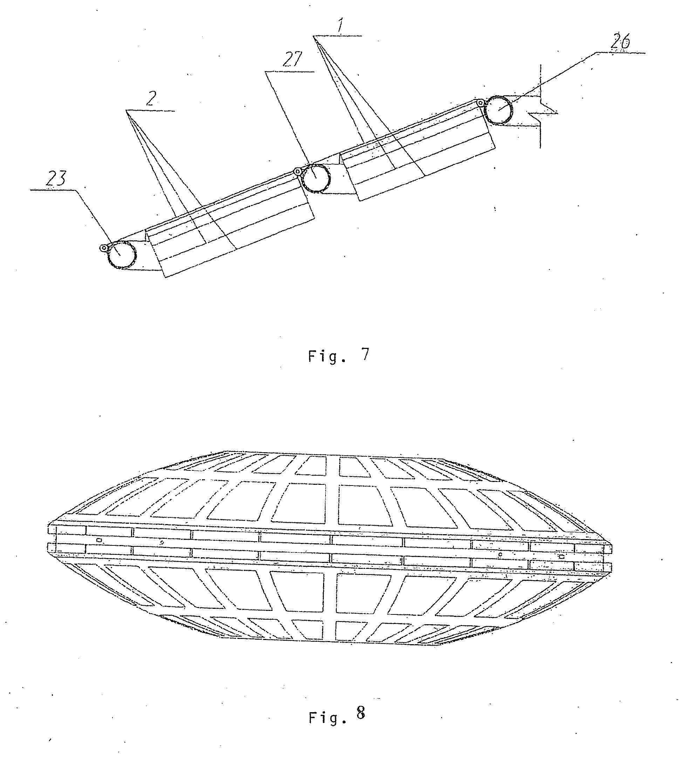

Fig. 7 shows connection of blades within a tier.

The above figures show aircraft components with the following references:
1 - blade from one of the rows of the upper turbine;
2 - blade from the other row of the upper turbine;
3 - blade from one of the rows of the lower turbine;
4 - blade from the other row of the lower turbine;
5 - side blade;
6 - upper turbine housing;
7 - lower turbine housing;
8 - jet propulsion system nozzle;
9 - horizontal movement turbine air intake;
10 - aircraft's vertical axis;
11 - small (upper) disc of the upper turbine;
12 - small (lower) disc of the lower turbine;
13 - intermediate turbine;
14 - shaft;
15 - automated blade movement controller;
16 - automated blade movement controlment lever;
17 - automated blade angle controller;
18 - automated blade angle controlment lever;
19 - automated side blade angle controller;
20 - automated side blade angle controller;
21 - hinged support;
22 - radial beam;
23 - housing's large ring;
24 - balancing wing;
25 - hinged support of the balancing wing;
26 - small ring of the housing;
27 - intermediate ring of the housing.

The propose aircraft with vertical takeoff and landing operates in the following way:
Aircraft's jet propulsion air engines are started. When the aircraft climbs, it simultaneously opens blades 1 and 2 of the upper turbine, blades 3 and 4 of the lower turbine, as well as side blade 5 of the upper and lower turbine. The automated blade angle controller 17, using lever 18, lifts (lowers) one side of blades 1 and 2 of the upper turbine, blades 3 and 4 of the lower turbine, while the other side of blades 1 and 2 of the upper turbine and blades 3 and 4 of the lower turbine are automatically lowered so the air pressure from above would be directed downward (inside aircraft housings). The automated blade extension controller 15, using lever 16, lifts up shafts 14 to extend blades 1 and 2 of the upper turbine and blades 3 and 4 of the lower turbine to the required altitude. Automated side blade angle controllers 19, using lever 20, and automated side blade extension controllers (not shown on drawings) control the change in positions of side blades 5 in such a way, so side blades 5 would direct air from above downward.

If the aircraft is equipped with intermediate turbines 13, when the aircraft climbs, intermediate turbine blades 13 open and direct air from above downward. Furthermore, the upper turbine collects air from above and supplies it down to intermediate turbines 13, which, in turn, supply air to the lower turbine, which directs air downward. Air is emitted (as exhaust gases) through the vertical jet propulsion system (not shown on drawings), increasing the aircraft's lift force. The aircraft easily takes off due to the synchronous operation of all turbines. After that, as soon as the aircraft is off the ground, side movement turbines turn on. The aircraft simultaneously climbs and flies in a given direction. The given direction is controlled by crossover valves (not shown on drawings).

After climbing with side movement (movement in the horizontal plane), blades 1 and 2 of the upper turbine, blades 3 and 4 of the lower turbine and side blades 5 may be placed (lowered) in their initial position. When moving horizontally while descending, blades 1 and 2 of the upper turbine, blades 3 and 4 of the lower turbine and side blades 5 open in such a way so the head wind, blowing from below and along the aircraft's movement, would turn turbines, create a resistance to descend the aircraft and generate electricity.

To maintain the necessary altitude, the upper turbine collects air from above and supplies it downward, thus maintaining the aircraft at the necessary altitude. When required, the lower turbine is turned on, as well as the intermediate turbine (or intermediate turbines, if there are several of them), and turbines switch to electric generators and generate electricity, which is supplied to accumulators. The aircraft's control center constantly monitors the operation of all turbines and their switch from one function to another (from electric generators to engines and back), as well as it controls the angle (and/or extension) of blades on every turbine.

The proposed aircraft can take an emergency landing even from a high altitude, while remaining undamaged, since every turbine is equipped by at least one air engine and a separate receiver, which are separately connected to the air blower or several blowers. Air engines turn on automatically at a certain descending speed and maintains the needed speed while landing, and engines are equipped with a separate (emergency) control system.

## Claims

1. An aircraft with vertical takeoff and landing, differing by having at least two turbines, lower of which is plate-shaped, and the upper one is flat or plate-shaped, and each turbine is equipped with jet propulsion system, and the housing of each turbine is installed on a metal disc, connected to the vertical shaft of the aircraft, and equipped with blades that are able to change their position.

2. An aircraft per claim 1, differing by having at least one intermediate turbine, installed between the upper and lower turbine, and designed as flat or plate-shaped.

3. An aircraft per claim 1, differing by having a cabin.

4. An aircraft per claim 1, differing by having jet propulsion system equipped with at least one air engine and receivers, connected to blower(s).

5. An aircraft per claim 1 and 2, differing by having at least one horizontal movement turbine and air intakes, connected by receivers of the horizontal movement turbine with crossover control valves to ensure the aircraft's side movement.

6. An aircraft per claim 1, differing by having each turbine housing made of metal and equipped with at least two rings, one of which is connected to a disc, and radial struts, placed along the turbine housing perimeter and connected with rings and blades.

7. An aircraft per claim 1 or 2, differing by having the aircraft equipped with automated blade angle controllers and/or automated blade extension controllers to change blade positions.

8. An aircraft per claim 1, differing by having blades installed at least in one row along the housing perimeter.

9. An aircraft per claim 1, differing by having blades installed at least in one tier.

10. An aircraft per claim 1, differing by having blades installed to partially overlap each other.

11. An aircraft per claim 1, differing by having additionally side blades installed on turbine housings, having an ability to change the turning angle up to 90°.

12. An aircraft per claim 1, differing by having electric generators.

13. An aircraft per claim 1, differing by having a balancing wing, installed on the upper turbine housing, having an ability to control its turn to ensure horizontal position during the flight.

14. An aircraft per claim 1, differing by having supports for the aircraft's landing and standing.
